**Europäisches Patentamt**

**European Patent Office**

**Office européen des brevets**.

(19)

(11) Veröffentlichungsnummer: **0 230 661**

**A1**

(12)

# EUROPÄISCHE PATENTANMELDUNG

(21) Anmeldenummer: **86118061.0**

(22) Anmeldetag: **24.12.86**

(51) Int. Cl.4: **F16H 5/04** , **G05G 9/02** ,
//**B60K20/02**

(30) Priorität: **21.01.86 US 821403**

(43) Veröffentlichungstag der Anmeldung:
**05.08.87 Patentblatt 87/32**

(84) Benannte Vertragsstaaten:
**DE ES FR GB**

(71) Anmelder: **DEERE & COMPANY**
**1 John Deere Road**
**Moline Illinois 61265(US)**

(72) Erfinder: **Korrect, Steven G.**
**2841 Summer Drive**
**Dubuque Iowa 52001(US)**
Erfinder: **Kaukaskie, Robert L.**
**711 Summer Drive**
**Dubuque Iowa 52001(US)**

(74) Vertreter: **Feldmann, Bernhard**
**DEERE & COMPANY European Office, Patent**
· **Department Steubenstrasse 36-42 Postfach**
**503**
**D-6800 Mannheim 1(DE)**

(54) **Schaltvorrichtung.**

(57) Eine Schaltvorrichtung (10) für ein aus mindestens zwei Komponenten bestehendes Getriebe weist einen Schalthebel (26) auf, der in zwei Ebenen verschwenkbar ist, wobei eine Bewegung in der einen Ebene zu einem Schaltvorgang in der einen Komponente und eine Bewegung in der anderen Ebene zu einem Schaltvorgang in der anderen Komponente führt. Der Schalthebel (26) kann zudem in eine Neutralstellung gebracht werden.

Um zu verhindern, daß der Schalthebel (26) unbeabsichtigt aus seiner Neutralstellung herausbewegt werden kann, ist eine Ausnehmung (19) im Bereich der Neutralstellung vorgesehen, in die der Schalthebel (26) von einer Feder (68) gedrängt wird.

EP 0 230 661 A1

Fig. 3

## Schaltvorrichtung

Die Erfindung betrifft eine Schaltvorrichtung für ein aus mindestens zwei Komponenten bestehendes Getriebe mit einem in einer Kulisse geführten Schalthebel, der in zwei Ebenen bewegbar ist und bei der Bewegung in jeder der Ebenen eine der Komponenten schaltet und der mittels einer Feder in eine Neutralstellung bringbar ist, in der mindestens eine der Komponenten keinen Durchtrieb liefert.

Es ist eine Vielzahl an Schaltvorrichtungen mit einem Schalthebel bekannt, der in zwei Ebenen - schwenkbar ist und bei einem Schwenkvorgang in der einen Ebene einen Schaltvorgang in einer ersten Komponente eines Getriebes und bei einem Schwenkvorgang in der anderen Ebene einen Schaltvorgang in einer zweiten Komponente vorbereitet oder durchführt. Normalerweise verlaufen die Ebenen senkrecht zueinander, und die erste Ebene ist der Fahrtrichtung und die zweite Ebene der Fahrtgeschwindigkeit zugeordnet.

Eine derartige Schaltvorrichtung ist aus der FR-A-2 362 439 bekannt, und sie enthält zudem eine Feder, die bewirkt, daß sich der Schalthebel in eine Neutralstellung bewegt, sobald er eine bestimmte Stellung in der Kulisse eingenommen hat. Die Kulisse enthält zwei parallel zueinander verlaufende Schlitze, von denen einer für die Vorwärts-und einer für die Rückwärtsfahrt bestimmt ist, wobei sich die Neutralstellung zwischen beiden Schlitzen in einem Querschlitz befindet.

Derartige Schaltvorrichtungen finden häufig Anwendung bei der Steuerung von hydraulisch arbeitenden Getrieben, die bereits bei kleinen Schaltwegen des Schalthebels einen Durchtrieb durch das Getriebe hervorrufen können.

Mit den bekannten Schaltvorrichtungen ist es nicht möglich, ein unbeabsichtigtes Bewegen des Schalthebels und somit die Einleitung eines unbeabsichtigten Schaltvorganges zu unterbinden.

Die der Erfindung zugrunde liegende Aufgabe wird darin gesehen, eine Schaltvorrichtung mit einem in zwei Ebenen beweglichen Schalthebel zu - schaffen, der gegen eine unbeabsichtigte Schaltbewegung geschützt ist.

Diese Aufgabe ist gemäß Patentanspruch 1 erfinderisch gelöst worden.

Auf diese Weise wird der Schalthebel unabhängig vom Willen einer Bedienungsperson automatisch in die Ausnehmung gedrängt und in dieser gehalten, wenn das Getriebe keinen Durchtrieb liefern soll. Um den Schalthebel wieder aus der Ausnehmung zu bewegen, ist ein beabsichtigter Schaltvorgang erforderlich, so daß z. B. ein mit dem Getriebe versehenes Kraftfahrzeug nicht aus Unachtsamkeit oder aufgrund von Erschütterungen in Bewegung gesetzt werden kann.

In den Unteransprüchen ist eine Vielzahl von die Erfindung fortentwickelnden Merkmalen genannt.

So führt die Anordnung der Ausnehmung in einem Querschlitz zwischen den beiden Schlitzen zu einer verstärkten Sicherheit, da sich der Schalthebel schon in einer Stellung befindet, in der er keinen Schaltvorgang auslösen kann, bevor er die Ausnehmung erreicht, und von der aus er sicher mittels der Feder in die Aussparung gebracht wird.

Das Festhalten des Schalthebels in der Neutralstellung auch beim Auftreten von größeren Erschütterungen wird durch die Anordnung einer Ausnehmung zusätzlich zu der Aussparung noch verstärkt, da in einem derartigen Falle der Schalthebel sowohl aus der Ausnehmung wie auch aus der Aussparung austreten muß.

Die Anordnung der Feder zwischen dem Schaltsegment und dem Schaltbügel führt stets zu einer sicheren Relativbewegung des Schaltbügels gegenüber dem Schaltsegment, da die Wirkung der Feder nicht von ihrer Befestigung an einem anderen Teil als dem Schaltsegment und dem Schaltbügel abhängt.

Die Führung des Schalthebels in die Aussparung wird zudem durch die Lehre gemäß Patentanspruch 5 gewährleistet.

Eine sichere Verbindung des Schalthebels mit einem Schaltgestänge für eine der Komponenten wird durch die in Patentanspruch 6 vorgeschlagenen Maßnahmen erreicht.

Zur Anzeige der jeweiligen Stellung des Schalthebels und somit des in dem Getriebe herrschenden Übersetzungsverhältnisses dient ein als Geberglied ausgebildeter Schalter, dessen Impulsgeber von dem Schaltsegment beaufschlagt wird.

In der Zeichnung ist ein nachfolgend näher beschriebenes Ausführungsbeispiel der Erfindung dargestellt. Es zeigt:

Figur 1 eine erfindungsgemäße Schaltvorrichtung in Seitenansicht,

Figur 2 die Schaltvorrichtung aus Figur 1 in Vorderansicht und

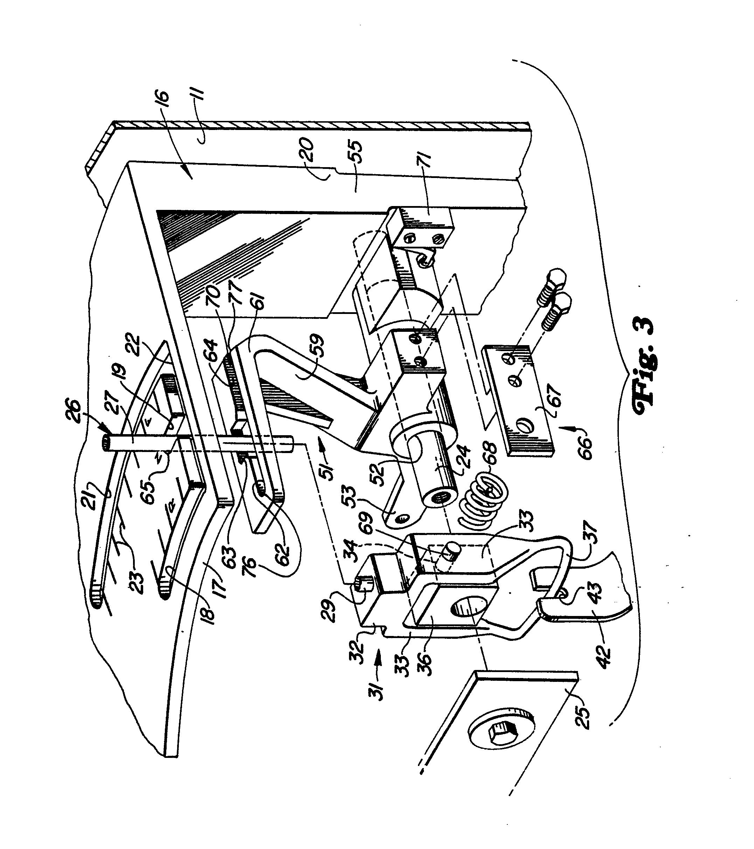

Figur 3 die Schaltvorrichtung in perspektivischer Darstellung.

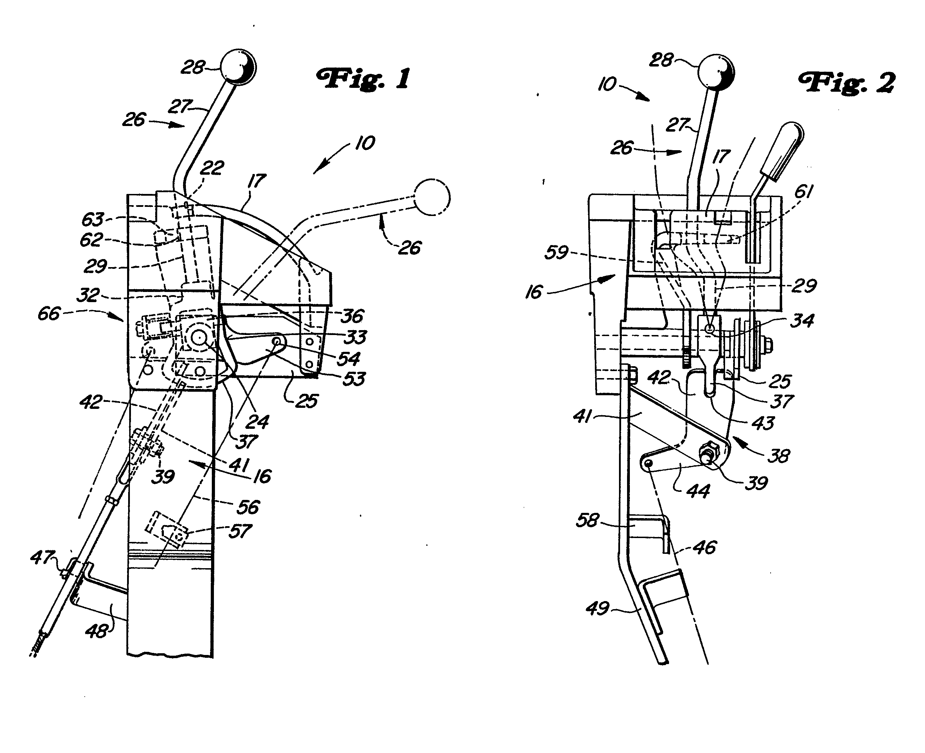

In Figur 1 ist eine Schaltvorrichtung 10 zu erkennen, die an einer Wand 11 und einem Boden 12 auf der rechten Seite einer Fahrerplattform oder einer Fahrerkabine angeordnet ist, so daß sie bequem von einem nicht gezeigten Fahrersitz aus erreicht werden kann. Die Schaltvorrichtung 10 enthält ein Gehäuse 16 mit einer Kulisse 17, in der ein erster Schlitz 18 für Rückwärtsfahrt, eine Ausnehmung 19, ebenfalls in der Art eines Schlitzes, für eine Neutralstellung und ein zweiter Schlitz 21 für Vorwärtsfahrt vorhanden sind, deren Enden, und damit sie selbst, über einen Querschlitz 22 miteinander verbunden sind. Auf der Kulisse 17 sind am Anfang der Schlitze 18, 21 und der Ausnehmung 19 Hinweise für Vorwärts (F -Forward), Rückwärts (R -Rearward) und Neutral (N -Neutral) angebracht, wobei -N-für die Neutralstellung eines nicht gezeigten hydraulisch schaltbaren, gegebenenfalls hydraulischen Getriebes steht. Außerdem sind in Abständen voneinander an jedem der Schlitze 18, 21 Hinweise auf der Kulisse 17 angebracht, denen die Übersetzung des Getriebes, d..h. der jeweils eingelegte Gang, an der jeweiligen Stelle des Schalthebels 26 anzeigende Zahlen zugeordnet sind.

Eine Achse 24, die als Schwenkachse dient, greift mit ihrem einen Ende an dem Gehäuse 16 und mit ihrem anderen Ende an einem Rahmen 25 an, der mit einem vorderen Ende 20 des Gehäuses 16 verbunden ist. Die Achse 24 verläuft im wesentlichen parallel zu der Erstreckung der Kulisse 17 und senkrecht zu der Längsausrichtung der Schlitze 18, 21 und der Ausnehmung 19.

Ein Schalthebel 26 ist vorgesehen, um die Bedienung des hydraulischen Getriebes eines Kraftfahrzeuges zu bewirken, und er enthält ein oberes freistehendes Ende 27 mit einer Kugel 28 für die Bedienung durch eine Bedienungsperson sowie ein unteres Ende 29, das unterhalb der Kulisse 17 vorgesehen ist. Es versteht sich, daß nicht gezeigte Richtungs-und Gangschaltventile eine Neutralstellung einnehmen, wenn sich der Schalthebel 26 in dem Querschlitz 22 befindet, wie dies ebenfalls noch erklärt wird.

Ferner ist ein zum Teil offener Schaltbügel 31 vorgesehen, dessen oberes Ende 32 mit dem unteren Ende 29 des Schalthebels 26 verbunden ist. Seine Seitenwände 33 nehmen in und zwischen sich einen Stift 34 zur Verbindung mit einem drehbeweglich auf der Achse 24 gelagerten Block 36 auf. Außerdem enthält der Schaltbügel 31 einen unteren Bügel 37, der mit dem oberen Ende 29 und den Seitenwänden 33 die Achse 24 radial umschließt. Diese kardanische Befestigung des Schaltbügels 31 auf der Achse 24 mittels des Blocks 36 ermöglicht eine Bewegung des Schaltbügels 31 sowohl in einer ersten Ebene, die sich senkrecht zu der Längsmittenachse der Achse 24 erstreckt, wie auch in einer zweiten Ebene, die parallel zu der Längsmittenachse der Achse 24 verläuft. Eine Bewegung des Schalthebels 26 innerhalb des Querschlitzes 22, der sich ebenfalls parallel zu der Längsmittenachse der Achse 24 erstreckt, bewirkt, daß sich der Schaltbügel 31 in der zweiten Ebene parallel zu der Längsmittenachse der Achse 24 bewegt; wohingegen eine Bewegung des Schalthebels 26 in einem der Schlitze 18, 21 oder in der Ausnehmung 19 eine Bewegung des Schaltbügels 31 in der ersten Ebene hervorruft.

Ein Winkelhebel 38 ist mittels einer Verbindung 39 in einem Halter 41 auf dem Gehäuse 16 angebracht, wobei ein oberer U-förmiger Arm 42 des Winkelhebels 38 eine Nut 43 enthält, die in sich den Bügel 37 des Schaltbügels 31 in der einen Schwenkrichtung formschlüssig hält bzw. aufnimmt. Der Winkelhebel 38 weist zudem ein unteres Ende 44 auf, das mit einem oberen Ende eines Schaltgestänges 46 verbunden ist, das wiederum auf des Fahrtrichtungsventil des Getriebes wirkt. Das Schaltgestänge 46 ist in einer Klemme 47 beweglich gehalten, die an einem über einen Teil 49 an dem Gehäuse 16 befestigten Halter 48 befestigt ist. Der Winkelhebel 38 und daher auch das Schaltgestänge 46 für die Steuerung des Fahrtrichtungsventils sind beweglich als Reaktion auf eine Bewegung des Schaltbügels 31 in der zweiten Ebene parallel zu der Längsmittenachse der Achse 24, und zwar aufgrund des Eingriffs des Bügels 37 in die Nut 43 des Armes 42, so daß der Arm 42 um seine Verbindung 39 schwenkt und dabei das Schaltgestänge 46 entweder nach oben oder nach unten bewegt. Andererseits wird die Stellung des Win kelhebels 38 nicht durch die Bewegung des Schaltbügels 31 in der ersten und senkrecht zu der Längsmittenachse der Achse 24 verlaufenden Ebene beeinflußt, weil sich der Bügel 37 durch die Nut 43 in dem Winkelhebel 38 bewegt, ohne eine Bewegung auf diesen zu übertragen.

Auf der Achse 24 ist zudem ein Schaltsegment 51 für die Gangwahl mit einer Bohrung 52 - schwenkbar angeordnet, und zwar seitlich des Blockes 36 und zwischen diesem und einem sich nach unten erstreckenden Abschnitt 55 des Gehäuses 16. Das Schaltsegment 51 enthält einen ersten Arm 53, der sich radial zu der Achse 24 erstreckt und bei 54 mit dem oberen Ende eines Schaltgestänges 56 verbunden ist, wobei dieses Schaltgestänge 65 mit einem nicht gezeigten Gangschaltventil in Verbindung steht. Das Schaltgestänge 56 erstreckt sich ebenfalls durch eine Klemme 57, die auf einem am unteren Teil 49 des Gehäuses 16 angebrachten Halter 58 befestigt ist. Ein zweiter Arm 59 des Schaltsegments 51 erstreckt sich ebenfalls radial zu der Achse 24 und enthält einen oberen Schenkel 61, der sich parallel zu und geringfügig unterhalb der Kulisse 17 erstreckt. Der obere Schenkel 61 des zweiten Armes 59 enthält einen Schlitz 62, der sich quer zu dem zweiten Arm 59 erstreckt und eine Aussparung 63 in der Mitte seiner Längserstreckung an einer vorne gelegenen Kante 64 aufweist.

Aus Figur 2 geht hervor, daß sich der obere Schenkel 61 des zweiten Armes 59 direkt unterhalb der Kulisse 17 befindet, so daß der Schlitz 62 vertikal nach dem Querschlitz 22 ausgerichtet und somit der Schalthebel 26 quer, vor und zurück in dem Querschlitz 22 und in dem Schlitz 62 des zweiten Armes 59 bewegt werden kann. Außerdem kann der Schalthebel 26 nach vorne aus dem Querschlitz 22 heraus in die Ausnehmung 19 hinein bewegt werden, bis sie an deren vorderen Ende 65 in der Kulisse 17 anschlägt. In dieser Stellung wird der Schalthebel 26 in die Aussparung 63, die Bestandteil des in dem Schenkel 61 vorgesehenen Schlitzes 62 ist, gebracht, wobei ein Einrücken des Schaltsegments 51 durch den Schalthebel 26 nicht erfolgt ist.

Es ist ferner zu erkennen, daß eine Bewegung des Schalthebels 26 aus dem Schlitz 62 heraus und in einen der Schlitze 18, 21 hinein durch eine vordere Querkante 70 des Schlitzes 62 zunächst verhindert wird, wenn der Schlitz 62 und der Querschlitz 22 der Kulisse 17 in einer sich vertikal deckenden Stellung befinden. Die Schaltgestänge 46 und 56 für das Fahrtrichtungs-und für das Gangschaltventil sind derart ausgebildet, daß sie bestrebt sind, die Elemente, mit denen sie verbunden sind, in der durch die Stellung des Schalthebels 26 vorgegebenen Stellung zu halten.

Um den Schalthebel 26 von dem Querschlitz 22 aus in die Ausnehmung 19 zu drängen, ist eine Vorspanneinheit 66 vorgesehen, die eine Platte 67 und eine Feder 68 enthält, wobei die Platte 67 an dem Schaltsegment 51 angebracht ist und sich sowohl an der Platte 67 wie auch an dem Schaltbügel 31 abstützt und wobei die Feder 68 einen Stift 69 umgibt, der sich von einer Seitenwand 33 des Schaltbügels 31 fort erstreckt. Daher wird der Schalthebel 26 ohne ein Zutun der Bedienungsperson in die Aussparung 63 von der Vorspanneinheit 66 gedrängt, sobald sich der Schalthebel 26 in der Mitte des vertikal nach dem Querschlitz 22 ausgerichteten Schlitzes 62 befindet. Da die Weite des Schlitzes 62 an seinen Enden 76 und 77 in der Vorwärts-Rückwärts-Richtung nur geringfügig größer ist als der Durchmesser des Schalthebels 26, bewirkt eine Schwenkbewegung des Schalthebels 26 in der Vorwärts-Rückwärts-Richtung in einem der Schlitze 18, 21, daß nicht nur der Schaltbügel 31, sondern auch das Schaltsegment 51 bewegt wird. Eine Bewegung des Schaltsegments 51 um die Achse 24 führt zu einer Verstellung des Schaltgestänges 56 zu dem Gangschaltventil, und zwar abhängig von dem Maß der Verstellung des Schalthebels 26. Jedoch bewirkt die Bewegung des Schaltbügels 31 keine Änderung oder Schaltung des Schaltgestänges 46 für das Fahrtrichtungsventil überhaupt, da in dieser Stellung und bei einer Bewegung in dieser Richtung keine formschlüssige Verbindung zwischen dem Schaltbügel 31 und dem Winkelhebel 38 besteht.

In diesem Ausführungsbeispiel ist ein Geberglied 71 in der Art eines Schalters vorgesehen, das auf einen an dem Gehäuse 16 befestigten Halter 72 aufmontiert ist und einen als Arm ausgebildeten Impulsgeber 73 enthält, der an dem Schaltsegment 51 an einer bestimmten Stelle anliegt. Das Geberglied 71 kann an eine sichtbare oder hörbare Signaleinrichtung angeschlossen werden, um eine oder mehrere Stellungen des Schalthebels 26 anzugeben.

## Ansprüche

1. Schaltvorrichtung (10) für ein aus mindestens zwei Komponenten bestehendes Getriebe mit einem in einer Kulisse (17) geführten Schalthebel (26), der in zwei Ebenen bewegbar ist und bei der Bewegung in jeder der Ebenen eine der Komponenten schaltet und der mittels einer Feder (68) in eine Neutralstellung bringbar ist, in der mindestens eine der Komponenten keinen Durchtrieb liefert, dadurch gekennzeichnet, daß die Kulisse (17) eine Ausnehmung (19) aufweist, in die der Schalthebel (26) gedrängt und in der er von der Feder (68) unverrückbar gehalten wird, wenn der Schalthebel (26) in seine Neutralstellung bewegt wird.

2. Schaltvorrichtung nach Anspruch 1, wobei die Kulisse (17) zwei parallel zueinander verlaufende Schlitze (18, 21) aufweist, die über einen Querschlitz (22) miteinander verbunden sind, und wobei die Ausnehmung (19) in dem Querschlitz (22) vorgesehen ist.

3. Schaltvorrichtung nach Anspruch 1 mit einem sich unterhalb der Kulisse (17) erstreckenden Schaltsegment (51), das mittels des Schalthebels (26) verschwenkbar ist, um eine der Komponenten zu schalten, wobei das Schaltsegment (51) eine Aussparung (63) aufweist, die in der Neutralstellung des Schalthebels (26) in Deckung mit der Ausnehmung (19) bringbar ist.

4. Schaltvorrichtung nach Anspruch 1 mit einem Schaltsegment (51) und einem Schaltbügel (31), wobei das Schaltsegment (51) auf einer ortsfesten Achse (24) tangential beweglich gelagert und der Schaltbügel (31) in einer Ebene schwenkbar ist, die durch die Längsmittenachse der Achse (24) verläuft, und wobei sich die Feder (68) einenends an dem Schaltsegment (51) und anderenends an dem Schaltbügel (31) abstützt.

5. Schaltvorrichtung nach Anspruch 3 oder 4, wobei die Aussparung (63) Bestandteil eines Schlitzes (62) in dem Schaltsegment (51) ist, der sich in einer der Schwenkebenen erstreckt.

6. Schaltvorrichtung nach Anspruch 4, wobei der Schaltbügel (31) an einer Stelle mit dem Schalthebel (26) verbunden ist und die Achse (24) radial vollkommen umgibt und wobei der Schaltbügel - (31) an einer dem Schalthebel (26) diametral gegenüberliegenden Stelle stets in Eingriff mit einem Schaltgestänge (46) steht.

7. Schaltvorrichtung nach Anspruch 3 oder 4, wobei das Schaltsegment (51) mit einem Impulsgeber (73) versehen ist, der auf ein Geberglied (71) zur Anzeige einer jeweiligen Schaltstellung wirkt.

**Fig. 1**

28
27
26
22
17
10
63
62
29
32
66
36
33
54
53
25
24
42
37
39
41 16
56
57
47
48

**Fig. 2**

28
10
27
26
17
61
59
16
29
34
42
25
37
43
41
38
44
39
58
46
49

0 230 661

**Fig. 3**

## EINSCHLÄGIGE DOKUMENTE

EP 86118061.0

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE - A1 - 2 938 640 (DEERE & CO.)<br>    * Ansprüche 1,2,4,18; Fig. 3 (Teile 64,72,162) *<br><br>-- | 1,2,3,4 | F 16 H  5/04<br><br>G 05 G  9/02//<br><br>B 60 K 20/02 |
| D,Y | FR - A - 2 362 439 (INTERNATIONAL HARVESTER CO.)<br>    * Gesamt *<br><br>-- | 1,2,3,4 | |
| A | GB - A - 1 511 890 (FIAT-ALLIS CONSTRUCTION)<br>    * Fig. 1,5 *<br><br>-- | 1,2 | |
| A | FR - A - 2 143 094 (MASSEY-FERGU-SON)<br><br>---- | | |

**RECHERCHIERTE SACHGEBIETE (Int. Cl.4)**

F 16 H  5/00

F 16 H 11/00

F 16 H 17/00

B 60 K 20/00

G 05 G  9/00

Der vorliegende Recherchenbericht wurde für alle Patentansprüche erstellt.

| Recherchenort | Abschlußdatum der Recherche | Prüfer |
|---|---|---|
| WIEN | 09-04-1987 | HEMMELMEIER |